(19) Europäisches Patentamt / European Patent Office / Office européen des brevets

(11) **EP 4 189 361 B1**

(12) **EUROPEAN PATENT SPECIFICATION**

(45) Date of publication and mention
of the grant of the patent:
**05.11.2025 Bulletin 2025/45**

(21) Application number: **20947357.8**

(22) Date of filing: **31.07.2020**

(51) International Patent Classification (IPC):
**G01N 35/00** (2006.01) **G01N 1/31** (2006.01)

(52) Cooperative Patent Classification (CPC):
**G01N 35/00663;** G01N 1/31; G01N 2035/00673;
G01N 2035/00891

(86) International application number:
**PCT/CN2020/106115**

(87) International publication number:
**WO 2022/021289 (03.02.2022 Gazette 2022/05)**

(54) **METHOD, APPARATUS AND EQUIPMENT FOR MONITORING CONCENTRATION OF REAGENT, AND COMPUTER READABLE STORAGE MEDIUM**

VERFAHREN, VORRICHTUNG UND AUSRÜSTUNG ZUR ÜBERWACHUNG DER KONZENTRATION EINES REAGENS, UND COMPUTERLESBARES SPEICHERMEDIUM

PROCÉDÉ, APPAREIL ET ÉQUIPEMENT DE SURVEILLANCE DE CONCENTRATION DE RÉACTIF, ET SUPPORT D'ENREGISTREMENT LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.06.2023 Bulletin 2023/23**

(73) Proprietor: **Leica Biosystems Nussloch GmbH
69226 Nussloch (DE)**

(72) Inventor: **YIN, Li
Shanghai 201206 (CN)**

(74) Representative: **Schaumburg und Partner
Patentanwälte mbB
Mauerkircherstraße 31
81679 München (DE)**

(56) References cited:
| | |
|---|---|
| CN-A- 103 926 135 | CN-A- 105 067 545 |
| CN-A- 111 141 564 | US-A1- 2007 243 626 |
| US-A1- 2019 265 187 | US-A1- 2020 174 029 |

**Description**

## TECHNICAL FIELD

The present invention relates to a field of tissue processing technologies, and more particularly, to a method for monitoring a concentration of a reagent, an apparatus for monitoring a concentration of a reagent, an electronic device and a computer readable storage medium.

## BACKGROUND

When used for tissue processing, a reagent needs to meet a certain concentration level, such that it is an important job to monitor a concentration of the reagent. However, during the tissue processing, since the reagent is usually filled in or drained out from a container, which causes carryover left in the container, the concentration may be changed, such that it is difficult to obtain the accurate concentration of the reagent.

Document US 2020/174029 A1 discloses a method of operating a tissue processor for processing tissue samples. The method includes conducting reagent from at least one container or at least one retort to at least one sensor, automatically measuring, by means of at least one sensor, a measured purity level of the reagent, checking whether the measured purity level meets a predetermined purity level of the reagent associated with the container, and thereby automatically determining whether the reagent is suitable for processing tissue samples in the tissue processor. The method further includes automatically determining a carry over volume of the first reagent from the first container into the second reagent from the second container. The carry over volume can be determined by firstly, providing an initial volume of the second reagent in the second container. Then the method includes performing the measuring step to measure, using the sensor(s), a density value of the first reagent on draining of the retort and a density value of the second reagent on filling and draining of the retort. The carry over volume can then be calculated automatically based on these measured values. The carry over volume can be used by the reagent management system to estimate the contamination levels of reagents/treatment fluids from other containers, such as the infiltrating baths. Accordingly, this method of calculating the carry over volume using actual measured reagent concentration provides accuracy in the calculation of the purity level or concentration of infiltrating fluids or other fluids by the reagent management system.

Document US 2007/243626 A1 discloses a method of managing resources of a histological tissue processor. The method comprises the step of nominating resources according to one of: a group, where a group nomination corresponds to a resource's function; a type, where a type nomination corresponds to one or more attributes of a resource within a group; and a station, where a station nomination corresponds to a point of supply of a resource.

## SUMMARY

The present invention provides a method for monitoring a concentration of a reagent, an apparatus for monitoring a concentration of a reagent, an equipment for monitoring a concentration of a reagent and a computer readable storage medium, which may monitor reagent purity in real time to remind user to replace the reagent in time, thus improving a quality of tissue processing.

In a first aspect of the present invention, a computer-implemented method for monitoring a concentration of a reagent is provided. The method includes: acquiring a first concentration of a current reagent measured during filling of the current reagent with a preset concentration from a reagent bottle into a vessel via a liquid path; acquiring a current volume of carryover left in the vessel and the liquid path determined in a process of filling a previous reagent into the vessel and draining the previous reagent out from the vessel; acquiring a second concentration of the current reagent measured during draining of the current reagent from the vessel to the reagent bottle via the liquid path, and determining, based on the preset concentration, a volume of the reagent bottle and the current volume of carryover, a third concentration of the current reagent after the current reagent is drained out from the vessel to the reagent bottle; updating the current volume of carryover left in the vessel and the liquid path based on the first concentration, the second concentration and the volume of the reagent bottle; and when the third concentration is less than a preset concentration limit, reminding a user to replace the current reagent and/or refreshing the current reagent with a higher concentrated reagent.

In an embodiment, determining, based on the preset concentration, the volume of the reagent bottle and the current volume of carryover, the third concentration of the current reagent after the current reagent is drained out from the vessel to the reagent bottle includes: after the current reagent is filled into the vessel, determining a concentration of the current reagent in the vessel based on the preset concentration, the volume of the reagent bottle and the current volume of carryover; after the current reagent is drained out from the vessel to the reagent bottle, controlling the reagent bottle to be supplemented with the current reagent having the preset concentration; and determining the third concentration of the current reagent in the reagent bottle based on the concentration of the current reagent in the vessel, the volume of the reagent bottle, the preset concentration and the current volume of carryover.

In an embodiment, the determining the concentration of the current reagent in the vessel based on the preset concentration, the volume of the reagent bottle and the current volume of carryover includes: calculating a volume of major component of the current reagent in the vessel using a formula of $Vaf = (Vb - Vco) \times Cbf$; and calculating the concentration of the current reagent in the vessel using a formula of $Caf = Vaf \div Vb$; where Vaf represents the volume of major component of the current reagent in the vessel, Vco represents the current volume of carryover, Vb represents the volume of the reagent bottle, and Cbf represents the preset concentration, Caf represents the concentration of the current reagent in the vessel.

In an embodiment, the determining the third concentration of the current reagent in the reagent bottle based on the concentration of the current reagent in the vessel, the volume of the reagent bottle, the preset concentration and the current volume of carryover includes: calculating a volume of major component of the current reagent in the reagent bottle using a formula of $Vad = (Vb - Vco) \times Caf + Vco \times Cbf$; and calculating the third concentration of the current reagent in the reagent bottle using a formula of $Cad = Vad \div Vb$; where Vad represents the volume of major component of the current reagent in the reagent bottle, Vco represents the current volume of carryover, Vb represents the volume of the reagent bottle, and Cbf represents the preset concentration, Caf represents the concentration of the current reagent in the vessel, and Cad represents the third concentration.

In an embodiment, updating the current volume of carryover left in the vessel and the liquid path based on the first concentration, the second concentration and the volume of the reagent bottle includes: calculating an updated volume of carryover using a formula of: $Vco' = (CDF - CDD)/CDF \times Vb$ ; and replacing the current volume of carryover with the updated volume of carryover, where Vco' represents the updated volume of carryover, CDD represents the second concentration of the current reagent, CDF represents the first concentration of the current reagent, and Vb represents the volume of the reagent bottle.

In an embodiment, the current reagent is selected from a group consisting of Ethanol and Xylene.

In a second aspect of the present invention, an apparatus for monitoring a concentration of a reagent is provided. The apparatus includes a first acquiring module, configured to, acquire a first concentration of a current reagent measured during filling of the current reagent with a preset concentration from a reagent bottle into a vessel via a liquid path; a second acquiring module, configured to, acquire a current volume of carryover left in the vessel and the liquid path determined in a process of filling a previous reagent into the vessel and draining the previous reagent out from the vessel; a determining module, configured to acquire a second concentration of the current reagent measured during draining of the current reagent from the vessel to the reagent bottle via the liquid path, and determine, based on the preset concentration, a volume of the reagent bottle and the current volume of carryover, a third concentration of the current reagent after the current reagent is drained out from the vessel to the reagent bottle; an updating module, configured to update the current volume of carryover left in the vessel and the liquid path based on the first concentration, the second concentration and the volume of the reagent bottle; and a reminding module, configured to remind a user to replace the current reagent when the third concentration is less than a preset concentration limit and/or a refreshing module, configured to refresh the current reagent with a higher concentrated reagent.

In an embodiment, the determining module includes a first determining unit, configured to, after the current reagent is filled into the vessel, determine a concentration of the current reagent in the vessel based on the preset concentration, the volume of the reagent bottle and the current volume of carryover; a control unit, configured to, after the current reagent is drained out from the vessel to the reagent bottle, control the reagent bottle to be supplemented with the current reagent having a preset concentration; and a second determining unit, configured to determine the third concentration of the current reagent in the reagent bottle based on the concentration of the current reagent in the vessel, the volume of the reagent bottle, the preset concentration and the current volume of carryover.

In an embodiment, the first determining unit includes a first calculating sub module, configured to calculate a volume of major component of the current reagent in the vessel using a formula of $Vaf = (Vb - Vco) \times Cbf$; and a second calculating sub module, configured to calculate the concentration of the current reagent in the vessel using a formula of $Caf = Vaf \div Vb$; where Vaf represents the volume of major component of the current reagent in the vessel, Vco represents the current volume of carryover, Vb represents the volume of the reagent bottle, and Cbf represents the preset concentration, Caf represents the concentration of the current reagent in the vessel.

In an embodiment, the second determining unit includes a third calculating sub module, configured to calculate a volume of major component of the current reagent in the reagent bottle using a formula of $Vad = (Vb - Vco) \times Caf + Vco \times Cbf$; and a fourth calculating sub module, configured to calculate the third concentration of the current reagent in the reagent bottle using a formula of $Cad = Vad \div Vb$; where Vad represents the volume of major component of the current reagent in the reagent bottle, Vco represents the current volume of carryover, Vb represents the volume of the reagent bottle, and Cbf represents the preset concentration, Caf represents the concentration of the current reagent in the vessel, and Cad represents the third concentration.

In an embodiment, the updating module includes a third determining unit, configured to determine an updated volume of carryover using a formula of: $Vco' = (CDF - CDD)/CDF \times Vb$ ; and a replacing unit, configured to replace the current volume of carryover with the updated volume of carryover, where Vco' represents the updated volume of carryover, CDD represents the second concentration of the current reagent, CDF represents the first concentration of the current reagent, and Vb represents the volume of the reagent bottle.

In an embodiment, the current reagent is selected from a group consisting of Ethanol and Xylene.

In a third aspect of the present invention, an equipment for monitoring a concentration of a reagent according to claim 12 is provided.

In a fourth aspect of the present invention, a non-transitory computer-readable medium is provided. The computer-readable medium includes instructions executable by a processor stored therein. When the instructions are executed by the processor, the processor is caused to perform the above method according to any of embodiments of the present invention.

With the method and the apparatus for monitoring the concentration of the reagent, the first concentration of the current reagent measured during filling of the current reagent with the preset concentration from the reagent bottle into the vessel via the liquid path can be acquired, and the current volume of carryover left in the vessel and the liquid path determined in the process of filling the previous reagent into the vessel and draining the previous reagent out from the vessel can be acquired, then the second concentration of the current reagent measured during draining of the current reagent from the vessel to the reagent bottle via the liquid path can be acquired and the third concentration of the current reagent after the reagent is drained out from the vessel to the reagent bottle can be determined based on the preset concentration, the volume of the reagent bottle and the current volume of the carryover and the current volume of the carryover left in the vessel and the liquid path can be updated based on the first concentration , the second concentration and the volume of the reagent bottle, when the third concentration is less than the preset concentration limit, the user is reminded to replace the current reagent. In this way, the volume of the carryover left in the vessel can be updated dynamically, such that the concentration of the reagent can be determined accurately in real time to remind the user to replace the reagent in time, thus improving the quality of tissue processing.

## BRIEF DESCRIPTION OF THE DRAWINGS

In order to clearly illustrate technical solutions of embodiments of the present invention, a brief description of drawings used in embodiments is given below. Obviously, the drawings in the following descriptions are only part embodiments of the present invention, and for those skilled in the art, other drawings can be obtained according to these drawings without creative labor.

FIG. 1 is a flowchart of a method for monitoring a concentration of a reagent according to some embodiments of the present invention.

FIG. 2 is a flowchart indicating a process of obtaining a concentration of a reagent according to some embodiments of the present invention.

FIG. 3 is a block diagram of an apparatus for monitoring a concentration of a reagent according to some embodiments of the present invention.

FIG. 4 is a block diagram of an electronic device.

## DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of apparatuses and methods consistent with aspects related to the present invention as recited in the appended claims.

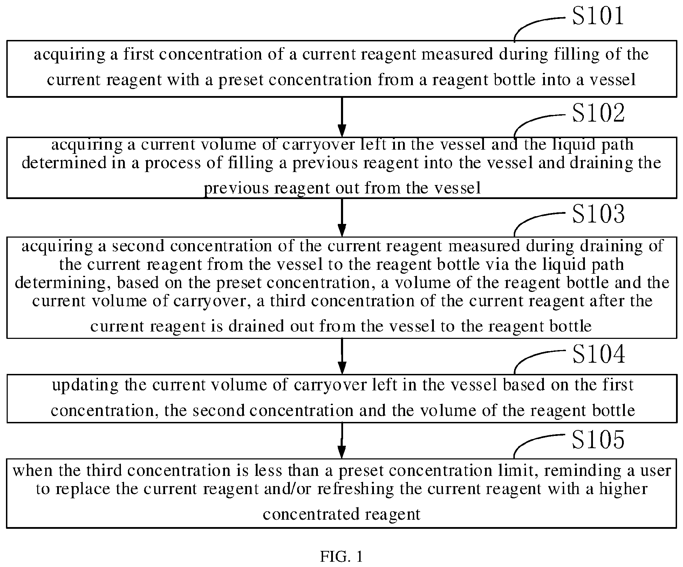

The present invention provides a method for monitoring a concentration of a reagent. The reagent is used for tissue processing, which may be Ethanol and Xylene. As illustrated in FIG. 1, the method includes steps 101-105.

At step S101, a first concentration of a current reagent measured during filling of the current reagent with a preset concentration from a reagent bottle into a vessel via a liquid path is acquired.

In this embodiment, while filling the reagent from the reagent bottle into the vessel via the liquid path, the concentration of the reagent can be measured by a density meter.

At step S102, a current volume of carryover left in the vessel and the liquid path determined in a process of filling a previous reagent into the vessel and draining the previous reagent out from the vessel is acquired.

While filling the reagent into the vessel and draining the reagent out from the vessel via the liquid path, it is typically that there is carryover left in the vessel and the liquid path. In a case that the vessel has carryover left therein, when a reagent is filled into the vessel and drained out from the vessel via the liquid path, the concentration of the reagent may be changed. In order to monitor the concentration of the reagent, the current volume of carryover left in the vessel and the liquid path is acquired. The current volume of carryover left in the vessel and the liquid path is caused by filling the previous reagent into the vessel and draining the pervious reagent out from the vessel via the liquid path, such that the current volume of carryover can be determined in the process of filling the previous reagent into the vessel and draining the pervious reagent out from the vessel.

At step S103, a second concentration of the current reagent measured during draining of the current reagent from the vessel to the reagent bottle via the liquid path is acquired; and based on the preset concentration, a volume of the reagent bottle and the current volume of carryover, a third concentration of the current reagent after the current reagent is drained out from the vessel to the reagent bottle is determined.

After the reagent is filled into the vessel, due to the current volume of carryover left in the vessel and the liquid path, the concentration of the reagent in the vessel is changed relative to the concentration of the reagent during the filling. Further, due to the current volume of carryover left in the vessel and the liquid path, after the reagent is drained our from the vessel into the reagent bottle via the liquid path, the concentration of the reagent now in the reagent bottle is not the same as the original concentration of the reagent in the reagent bottle.

In some embodiments, the third concentration of the current reagent after the current reagent is drained out from the vessel to the reagent bottle can be determined as follows. After the current reagent is filled into the vessel, a concentration of the current reagent in the vessel is determined based on the preset concentration, the volume of the reagent bottle and the current volume of carryover left in the vessel. After the current reagent is drained out from the vessel to the reagent bottle, the reagent bottle is supplemented with the current reagent having the preset concentration. The third concentration of the current reagent in the reagent bottle is determined based on the concentration of the current reagent in the vessel, the volume of the reagent bottle, the preset concentration and the current volume of carryover left in the vessel.

In some embodiments, after the reagent is filled into the vessel, a volume of major component of the reagent in the vessel can be determined according to a formula of:

$$Vaf = (Vb - Vco) \times Cbf$$

where Vaf represents the volume of major component of the reagent in the vessel, Vco represents the current volume of carryover left in the vessel, Vb represents the volume of the reagent bottle, and Cbf represents the preset concentration.

Based on the volume of the major component and the volume of the reagent bottle, the concentration of the reagent in the vessel can be calculated using a formula of:

$$Caf = Vaf \div Vb$$

where Caf represents the concentration of the current reagent in the vessel.

In the vessel, the reagent may be used for tissue processing. After the tissue processing, the reagent can be drained out from the vessel back to the reagent bottle, and the reagent bottle will be supplemented with the current reagent having the preset concentration to ensure that the reagent bottle is filled with the current reagent, i.e., there is the volume of the reagent bottle of the current reagent. Then the concentration of the reagent in the reagent bottle is determined as follows.

A volume of major component of the reagent in the reagent bottle is calculated using a formula of:

$$Vad = (Vb - Vco) \times Caf + Vco \times Cbf$$

where Vad represents the volume of major component of the current reagent in the reagent bottle.

The concentration of the reagent in the reagent bottle is calculated using a formula of:

$$Cad = Vad \div Vb$$

where Cad represents the concentration of the reagent in the reagent bottle.

At step S104, the current volume of carryover left in the vessel and the liquid path is updated based on the first concentration, the second concentration and the volume of the reagent bottle.

In the process of filling the reagent into the vessel and draining the reagent out from the vessel via the liquid path, the volume of carryover left in the vessel and the liquid path may be changed.

In some embodiments, after one round of filling the reagent into the vessel and draining the reagent out from the vessel via the liquid path, the current volume of carryover left in the vessel and the liquid path is replaced with an updated volume of carryover which can be determined as follows. Then during the next round of filling a reagent into the vessel and draining the reagent out from the vessel via the liquid path, the concentration of the reagent can be monitored in real time based on the updated volume of carryover.

The updated volume of carryover is determined based on the concentration of the reagent measured during the draining, the concentration of the reagent measured during the filling, and the volume of the reagent bottle. For example, the updated volume of carryover can be calculated using a formula of:

$$Vco' = (CDF - CDD)/CDF \times Vb$$

where Vco' represents the updated volume of carryover, CDD represents the concentration of the reagent measured during the draining, CDF represents the concentration of the reagent measured during the filling, and Vb represents the volume of the reagent bottle.

The above formula can be derived using a formula of:

$$CDD = ((Vco \times CW) + CDF \times (Vb-Vco)) \div Vb$$

where CW represents a water concentration. Assume that CW=0, then *CDD = (CDF × (Vb-Vco)) ÷ Vb*, form which the above formula can be derived.

At step S105, when the third concentration is less than a preset concentration limit, a user is reminded to replace the current reagent and/or the current reagent is refreshed with a higher concentrated reagent.

The reagent used for tissue processing needs to meet a certain concentration level, for example, the concentration of the reagent should be greater than the preset concentration limit, unless the tissue processing cannot be realized validly.

In order to ensure the effect of tissue processing, when the reagent does not meet the certain concentration level, the user may be reminded to replace the reagent with the reagent having the concentration greater than the preset concentration limit, or the reagent may be refreshed with a higher concentrated reagent.

The user may be reminded in various ways, for example, through an audio signal, a video signal, a vibration signal or other signals.

The method for monitoring the concentration of the reagent can be applied in several scenarios, for example the method can be applied in the tissue processing. During the tissue processing, the tissue hydroextractor is an important equipment for realizing dehydration of tissue, while the reagent is required during the dehydration of tissue. With the method for monitoring the concentration of the reagent, the tissue hydroextractor can monitor the concentration of the reagent used for the dehydration of tissue in real time, such that the user may be remaindered to replace the reagent at an appropriate time, thus on one hand ensuring that the concentration of the reagent meets the requirements for the dehydration of tissue, and on other hand avoiding waste of the reagent.

With the method for monitoring the concentration of the reagent, the first concentration of the current reagent measured during filling of the current reagent with the preset concentration from the reagent bottle into the vessel via the liquid path can be acquired, and the current volume of carryover left in the vessel and the liquid path determined in the process of filling the previous reagent into the vessel and draining the previous reagent out from the vessel can be acquired, then the second concentration of the current reagent measured during draining of the current reagent from the vessel to the reagent bottle via the liquid path can be acquired and the third concentration of the current reagent after the reagent is drained out from the vessel to the reagent bottle can be determined based on the preset concentration, the volume of the reagent bottle and the current volume of the carryover and the current volume of the carryover left in the vessel and the liquid path can be updated based on the first concentration , the second concentration and the volume of the reagent bottle, when the third concentration is less than the preset concentration limit, the user is reminded to replace the current reagent. In this way, the volume of the carryover left in the vessel can be updated dynamically, such that the concentration of the reagent can be determined accurately in real time to remind the user to replace the reagent in time, thus improving the quality of tissue processing.

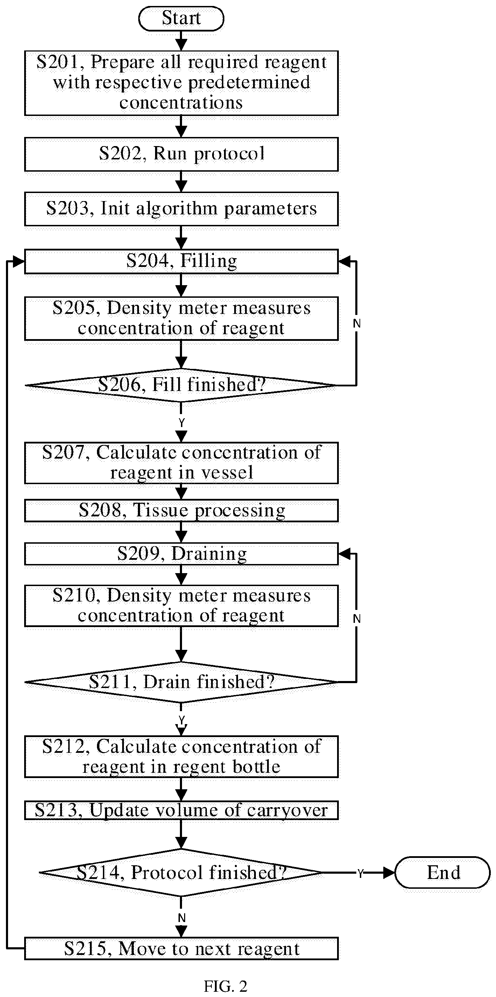

FIG. 2 is a flowchart illustrating a process of obtaining a concentration of a reagent according to some embodiments of the present invention.

At step S201, all required reagent with respective predetermined concentrations are prepared.

At step S202, a protocol is selected to run.

The protocol indicates how to use the reagent in tissue processing, for example, when to fill the reagent from a reagent bottle into a vessel and drain out the reagent from the vessel to the reagent bottle via a liquid path, an order of filling the reagents into the vessel and draining out the reagents from the vessel, or the like.

At step S203, algorithm parameters are initialized.

For example, a current volume of carryover left in the vessel and the liquid path is initialized to 0, and a volume of the reagent bottle is assigned according to actual situations. The algorithm parameters may be stored in a cache.

At step S204, the reagent is filled into the vessel via the liquid path according to the selected protocol.

At step S205, a concentration of the reagent during the filling is measured by a density meter during the filling of the reagent.

At step S206, it is determined whether the reagent is filled into the vessel.

At step S207, a concentration of the reagent in the vessel is calculated.

The concentration of the reagent in the vessel is calculated by using formulas of:

$$Vaf = (Vb - Vco) \times Cbf;$$

$$Caf = Vaf \div Vb;$$

where Vaf represents a volume of major component of the reagent in the vessel, Vco represents the current volume of carryover, Vb represents the volume of the reagent bottle, and Cbf represents the predetermined concentration, Caf represents the concentration of the reagent in the vessel.

In the first round of the protocol, the current volume of carryover has the initial value, while in the subsequent round of the protocol, the current volume of carryover has a value determined in a round immediately previous to the current round. For example, in the first round of the protocol, a value of a volume of carryover is determined, and in the second round of the protocol, the value of the volume of carryover determined in the first round is used to calculate the concentration of the reagent.

At step S208, tissue processing is performed.

At step S209, the reagent is drained out from the vessel to the reagent bottle via the liquid path.

At step S210, a concentration of the reagent during the draining is measured by a density meter during the draining of the reagent.

At step S211, it is determined whether the reagent is drained out from the vessel.

After the reagent is drained out from the vessel to the reagent bottle, the reagent bottle is not filled with since there is carryover left in the vessel and the liquid path, then the reagent bottle is supplemented with the reagent with the predetermined concentration to ensure that the amount of reagent reaches the volume of the reagent bottle.

At step S212, a current concentration of the reagent in the reagent bottle is calculated.

The current concentration of the reagent in the reagent bottle is calculated by using formulas of:

$$Vad = (Vb - Vco) \times Caf + Vco \times Cbf;$$

$$Cad = Vad \div Vb;$$

where Vad represents the volume of major component of the reagent in the reagent bottle, Vco represents the current volume of carryover, Vb represents the volume of the reagent bottle, and Cbf represents the predetermined concentration, Caf represents the concentration of the reagent in the vessel, and Cad represents the current concentration of the reagent in the reagent bottle.

At step S213, the current volume of carryover left in the vessel and the liquid path is updated.

The current volume of carryover left in the vessel is updated by using formulas of:

$$Vco' = (CDF - CDD)/CDF \times Vb$$

where CDD represents the concentration of the reagent during the draining, CDF represents the concentration of the reagent during the filling, and Vb represents the volume of the reagent bottle, Vco' represents the updated volume of carryover.

At step S214, it is determined whether the protocol is completely realized, if yes, the process is finished, otherwise step S215 is executed.

At step S215, a next reagent is picked for tissue processing.

In the process of obtaining a concentration of a reagent, the volume of carryover left in the vessel is dynamically adjusted for each round, such that the more accurate concentration of the reagent can be obtained.

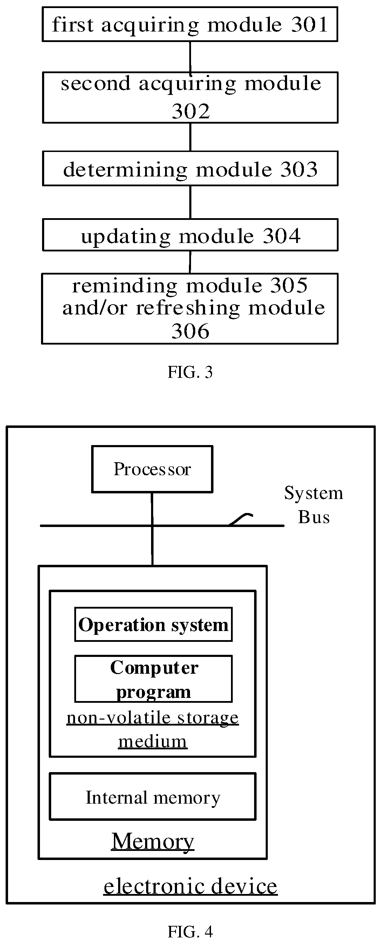

The present invention further provides an apparatus for monitoring a concentration of a reagent. As illustrated in FIG. 3, the apparatus includes a first acquiring module 301, a second acquiring module 302, a determining module 303, an updating module 304, and a reminding module 305 and/or a refreshing module 306.

The first acquiring module 301 is configured to acquire a first concentration of a current reagent measured during filling of the current reagent with a preset concentration from a reagent bottle into a vessel via a liquid path.

The second acquiring module 302 is configured to acquire a current volume of carryover left in the vessel and the liquid path determined in a process of filling a previous reagent into the vessel and draining the previous reagent out from the vessel.

The determining module 303 is configured to acquire a second concentration of the current reagent measured during draining of the current reagent from the vessel to the reagent bottle via the liquid path, and determine, based on the preset concentration, a volume of the reagent bottle and the current volume of carryover, a third concentration of the current reagent after the current reagent is drained out from the vessel to the reagent bottle.

The updating module 304 is configured to update the current volume of carryover left in the vessel and the liquid path based on the first concentration, the second concentration and the volume of the reagent bottle.

The reminding module 305 is configured to remind a user to replace the current reagent when the third concentration is less than a preset concentration limit.

The refreshing module 306 is configured to refresh the current reagent with a higher concentrated reagent.

With the apparatus for monitoring the concentration of the reagent, the first concentration of the current reagent measured during filling of the current reagent with the preset concentration from the reagent bottle into the vessel via the liquid path can be acquired, and the current volume of carryover left in the vessel and the liquid path determined in the process of filling the previous reagent into the vessel and draining the previous reagent out from the vessel can be acquired, then the second concentration of the current reagent measured during draining of the current reagent from the vessel to the reagent bottle via the liquid path can be acquired and the third concentration of the current reagent after the reagent is drained out from the vessel to the reagent bottle can be determined based on the preset concentration, the volume of the reagent bottle and the current volume of the carryover and the current volume of the carryover left in the vessel and the liquid path can be updated based on the first concentration , the second concentration and the volume of the reagent bottle, when the third concentration is less than the preset concentration limit, the user is reminded to replace the current reagent. In this way, the volume of the carryover left in the vessel can be updated dynamically, such that the concentration of the reagent can be determined accurately in real time to remind the user to replace the reagent in time, thus improving the quality of tissue processing.

In some embodiments, the determining module 303 includes: a first determining unit, a control unit and a second determining unit. The first determining unit is configured to, after the current reagent is filled into the vessel, determine a concentration of the current reagent in the vessel based on the preset concentration, the volume of the reagent bottle and the current volume of carryover. The control unit is configured to, after the current reagent is drained out from the vessel to the reagent bottle, control the reagent bottle to be supplemented with the current reagent having a preset concentration. The second determining unit is configured to determine the third concentration of the current reagent in the reagent bottle based on the concentration of the current reagent in the vessel, the volume of the reagent bottle, the preset concentration and the current volume of carryover.

In some embodiments, the first determining unit includes a first calculating sub module and a second calculating sub module. The first calculating sub module is configured to calculate a volume of major component of the current reagent in the vessel using a formula of $Vaf = (Vb - Vco) \times Cbf$. The second calculating sub module is configured to calculate the concentration of the current reagent in the vessel using a formula of $Caf = Vaf \div Vb$; where Vaf represents the volume of major component of the current reagent in the vessel, Vco represents the current volume of carryover, Vb represents the volume of the reagent bottle, and Cbf represents the preset concentration, Caf represents the concentration of the current reagent in the vessel.

In some embodiments, the second determining unit includes a third calculating sub module and a fourth calculating sub module. The third calculating sub module is configured to calculate a volume of major component of the current reagent in the reagent bottle using a formula of $Vad = (Vb - Vco) \times Caf + Vco \times Cbf$. The fourth calculating sub module is configured to calculate the third concentration of the current reagent in the reagent bottle using a formula of $Cad = Vad \div Vb$; where Vad represents the volume of major component of the current reagent in the reagent bottle, Vco represents the current volume of carryover, Vb represents the volume of the reagent bottle, and Cbf represents the preset concentration, Caf represents the concentration of the current reagent in the vessel, and Cad represents the third concentration.

In some embodiments, the updating module includes a third determining unit, a fourth determining unit, and a replacing unit. The third determining unit is configured to determine an updated volume of carryover using a formula of: $Vco' = (CDF - CDD)/CDF \times Vb$ ; where Vco' represents the updated volume of carryover, CDD represents the second concentration of the current reagent, CDF represents the first concentration of the current reagent, and Vb represents the volume of the reagent bottle. The replacing unit is configured to replace the current volume of carryover with the updated volume of carryover.

In some embodiments, the current reagent is selected from Ethanol and Xylene.

Regarding the device in the above embodiments, specific manners in which each module performs operations have been described in detail in the embodiments of the method, and will not be described in detail here.

The present invention also provides an equipment for monitoring a concentration of a reagent. The equipment may include a controller, a cache, a processor and a density meter. The density meter is configured to measure a concentration of a reagent during a filing and a second concentration of the reagent during a draining. The controller is configured to control a reagent to be filled in a vessel from a reagent bottle via a liquid path, and to control the reagent to be drained out from the vessel to the reagent bottle via the liquid path. In some embodiments, the controller may be further configured to control the reagent bottle to be supplemented with a reagent with a preset concentration. The cache may be configured to cache parameters including the preset concentration, a water concentration, a volume of the reagent bottle, a current volume of carryover left in the vessel. The processor may be configured to acquire a concentration of a concentration of a reagent measured by the density meter during filling of the reagent from the reagent bottle in the vessel, acquire acquired parameters including the current volume of carryover left in the vessel, the volume of the reagent bottle, the water concentration, the preset concentration from the cache, acquire a concentration of the reagent measured during the draining, determined a concentration of the reagent after the reagent is drained out from the vessel to the reagent bottle based on the preset concentration, the volume of the reagent bottle and the current volume of carryover, determine an updated current volume of carryover based on the concentration measured during the filling, the concentration measured during the draining and the volume of the reagent bottle, and replace the current volume of carryover saved in the cache with the updated current volume of carryover. Further, the processor is configured to remind a user to replace the reagent and/or refresh the current reagent with a higher concentrated reagent when the concentration of the reagent is less than a preset concentration limit.

FIG. 4 is a schematic diagram of an internal structure of an electronic device. As illustrated in FIG. 4, the electronic device includes a processor and a memory connected by a system bus. The processor is used to provide computing and control capabilities to support operations of the entire electronic device. The memory may include a non-volatile storage medium and an internal memory. The non-volatile storage medium stores an operating system and computer programs. The computer program is executed by the processor to implement the method for monitoring a concentration of a reagent according to the embodiments of the present invention. The internal memory provides a cached operating environment for the operating system and the computer programs in the non-volatile storage medium. The electronic device may be a mobile phone, a tablet computer, a personal digital assistant or a wearable device.

Each module in the apparatus for monitoring a concentration of a reagent according to the embodiments of the present invention may be implemented in the form of a computer program. When the computer program is executed by the processor, the steps of the method according to the embodiments of the present invention are implemented.

The present invention also provides a computer-readable storage medium containing computer-executable instructions, when the computer-executable instructions are executed by the one or more processors, the one or more processors are caused to perform the steps of the method for monitoring a concentration of a reagent according to the embodiments of the present invention.

A computer program product containing instructions is provided. When the instructions are running on a computer, the computer is caused to perform the method for monitoring a concentration of a reagent according to the embodiments of the present invention.

Any reference to memory, storage, database, or other media used in this application may include non-volatile and/or volatile memory. Suitable non-volatile memory may include read-only memory (ROM), programmable ROM (PROM), electrically programmable ROM (EPROM), electrically erasable programmable ROM (EEPROM), or flash memory. Volatile memory can include random access memory (RAM), which is used as external cache memory. By way of illustration and not limitation, RAM is available in various forms, such as static RAM (SRAM), dynamic RAM (DRAM), synchronous DRAM (SDRAM), dual data rate SDRAM (DDR SDRAM), enhanced SDRAM (ESDRAM), synchronous Link (Synchlink) DRAM (SLDRAM), memory bus (Rambus) direct RAM (RDRAM), direct memory bus dynamic RAM (DRDRAM), and memory bus dynamic RAM (RDRAM).

The preferred embodiments of the present invention have been described in detail above in conjunction with the accompanying drawings; however, the present invention is not limited to the particular details in the above embodiments.

In addition, it should be noted that the particular technical features described in the foregoing particular embodiments may be combined in any suitable manner without contradiction. In order to avoid unnecessary repetition, various possible combinations are not further explained in this disclosure.

In addition, various embodiments of the present invention can also be arbitrarily combined, as long as it does not violate the idea of the present invention, and it should also be regarded as the content disclosed in the present invention.

**Claims**

1. A computer-implemented method for monitoring a concentration of a reagent, comprising:

   acquiring a first concentration of a current reagent measured during filling of the current reagent with a preset concentration from a reagent bottle into a vessel via a liquid path;

acquiring a current volume of carryover left in the vessel and the liquid path determined in a process of filling a previous reagent into the vessel and draining the previous reagent out from the vessel;

acquiring a second concentration of the current reagent measured during draining of the current reagent from the vessel to the reagent bottle via the liquid path, and determining, based on the preset concentration, a volume of the reagent bottle and the current volume of carryover, a third concentration of the current reagent after the current reagent is drained out from the vessel to the reagent bottle;

updating the current volume of carryover left in the vessel and the liquid path based on the first concentration, the second concentration and the volume of the reagent bottle; and

when the third concentration is less than a preset concentration limit, reminding a user to replace the current reagent and/or refreshing the current reagent with a higher concentrated reagent.

2. The method of claim 1, wherein the determining, based on the preset concentration, the volume of the reagent bottle and the current volume of carryover, the third concentration of the current reagent after the current reagent is drained out from the vessel to the reagent bottle comprises:

after the current reagent is filled into the vessel, determining a concentration of the current reagent in the vessel based on the preset concentration, the volume of the reagent bottle and the current volume of carryover;

after the current reagent is drained out from the vessel to the reagent bottle, controlling the reagent bottle to be supplemented with the current reagent having the preset concentration; and

determining the third concentration of the current reagent in the reagent bottle based on the concentration of the current reagent in the vessel, the volume of the reagent bottle, the preset concentration and the current volume of carryover.

3. The method of claim 2, wherein the determining the concentration of the current reagent in the vessel based on the preset concentration, the volume of the reagent bottle and the current volume of carryover comprises:

calculating a volume of major component of the current reagent in the vessel using a formula of $Vaf = (Vb - Vco) \times Cbf$; and

calculating the concentration of the current reagent in the vessel using a formula of $Caf = Vaf \div Vb$;

where Vaf represents the volume of major component of the current reagent in the vessel, Vco represents the current volume of carryover, Vb represents the volume of the reagent bottle, and Cbf represents the preset concentration, Caf represents the concentration of the current reagent in the vessel.

4. The method of claim 3, wherein the determining the third concentration of the current reagent in the reagent bottle based on the concentration of the current reagent in the vessel, the volume of the reagent bottle, the preset concentration and the current volume of carryover comprises:

calculating a volume of major component of the current reagent in the reagent bottle using a formula of $Vad = (Vb - Vco) \times Caf + Vco \times Cbf$; and

calculating the third concentration of the current reagent in the reagent bottle using a formula of $Cad = Vad \div Vb$;

where Vad represents the volume of major component of the current reagent in the reagent bottle, Vco represents the current volume of carryover, Vb represents the volume of the reagent bottle, and Cbf represents the preset concentration, Caf represents the concentration of the current reagent in the vessel, and Cad represents the third concentration.

5. The method of any of claims 1-4, wherein the updating the current volume of carryover left in the vessel and the liquid path based on the first concentration, the second concentration and the volume of the reagent bottle comprises:

calculating an updated volume of carryover using a formula of:

$$Vco' = (CDF - CDD)/CDF \times Vb$$

replacing the current volume of carryover with the updated volume of carryover;

where Vco' represents the updated volume of carryover, CDD represents the second concentration of the current reagent, CDF represents the first concentration of the current reagent, and Vb represents the volume of the reagent bottle.

**6.** The method of any of claims 1-5, wherein the current reagent is selected from a group consisting of Ethanol and Xylene.

**7.** An apparatus for monitoring a concentration of a reagent, comprising:

a first acquiring module (301), configured to acquire a first concentration of a current reagent measured during filling of the current reagent with a preset concentration from a reagent bottle into a vessel via a liquid path; a second acquiring module, configured to, acquire a current volume of carryover left in the vessel and the liquid path determined in a process of filling a previous reagent into the vessel and draining the previous reagent out from the vessel; a determining module (303), configured to acquire a second concentration of the current reagent measured during draining of the current reagent from the vessel to the reagent bottle via the liquid path, and determine, based on the preset concentration, a volume of the reagent bottle and the current volume of carryover, a third concentration of the current reagent after the current reagent is drained out from the vessel to the reagent bottle; an updating module (304), configured to update the current volume of carryover left in the vessel and the liquid path based on the first concentration, the second concentration and the volume of the reagent bottle; and a reminding module (305), configured to remind a user to replace the current reagent when the third concentration is less than a preset concentration limit and/or a refreshing module (306), configured to refresh the current reagent with a higher concentrated reagent,

**8.** The apparatus of claim 7, wherein the determining module comprises:

a first determining unit, configured to, after the current reagent is filled into the vessel, determine a concentration of the current reagent in the vessel based on the preset concentration, the volume of the reagent bottle and the current volume of carryover; a control unit, configured to, after the current reagent is drained out from the vessel to the reagent bottle, control the reagent bottle to be supplemented with the current reagent having a preset concentration; and a second determining unit, configured to determine the third concentration of the current reagent in the reagent bottle based on the concentration of the current reagent in the vessel, the volume of the reagent bottle, the preset concentration and the current volume of carryover.

**9.** The apparatus of claim 8, wherein the first determining unit comprises:

a first calculating sub module, configured to calculate a volume of major component of the current reagent in the vessel using a formula of $Vaf = (Vb - Vco) \times Cbf$; and a second calculating sub module, configured to calculate the concentration of the current reagent in the vessel using a formula of $Caf = Vaf \div Vb$; where Vaf represents the volume of major component of the current reagent in the vessel, Vco represents the current volume of carryover, Vb represents the volume of the reagent bottle, and Cbf represents the preset concentration, Caf represents the concentration of the current reagent in the vessel.

**10.** The apparatus of claim 9, wherein the second determining unit comprises:

a third calculating sub module, configured to calculate a volume of major component of the current reagent in the reagent bottle using a formula of $Vad = (Vb - Vco) \times Caf + Vco \times Cbf$; and a fourth calculating sub module, configured to calculate the third concentration of the current reagent in the reagent bottle using a formula of $Cad = Vad \div Vb$; where Vad represents the volume of major component of the current reagent in the reagent bottle, Vco represents the current volume of carryover, Vb represents the volume of the reagent bottle, and Cbf represents the preset concentration, Caf represents the concentration of the current reagent in the vessel, and Cad represents the third concentration.

**11.** The apparatus of any of claims 7-10, wherein the updating module comprises:

a third determining unit, configured to determine an updated volume of carryover using a formula of:

$$Vco' = (CDF - CDD)/CDF \times Vb$$

a replacing unit, configured to replace the current volume of carryover with the updated volume of carryover; where Vco' represents the updated volume of carryover, CDD represents the second concentration of the current reagent, CDF represents the first concentration of the current reagent, and Vb represents the volume of the reagent bottle.

12. An equipment for monitoring a concentration of a reagent, comprising: a density meter, a cache, a controller and a processor;

wherein the controller is configured to control a current reagent with a preset concentration to be filled into a vessel from a reagent bottle via a liquid path, and to control the current reagent to be drained out from the vessel to the reagent bottle via the liquid path;
the density meter is configured to measure a first concentration of the current reagent during the filling and a second concentration of the current reagent during the draining;
the cache is configured to cache parameters including the preset concentration, a volume of the reagent bottle, a current volume of carryover left in the vessel and the liquid path, and a preset concentration limit;
the processor is configured to:

acquire the first concentration of the current reagent measured during the filling;
acquire the preset concentration, a water concentration, the volume of the reagent bottle, the preset concentration limit, and the current volume of carryover left in the vessel from the cache;
acquire the second concentration of the current reagent measured during the draining;
determine a third concentration of the current reagent after the current reagent is drained out from the vessel to the reagent bottle based on the preset concentration, the volume of the reagent bottle and the current volume of carryover;
determine an updated current volume of carryover left in the vessel and the liquid path based on the first concentration, the second concentration and the volume of the reagent bottle, and replace the current volume of carryover saved in the cache with the updated current volume of carryover; and
when the third concentration is less than the preset concentration limit, remind a user to replace the current reagent and/or refresh the current reagent with a higher concentrated reagent.

13. A non-transitory computer-readable medium having instructions stored thereon which, when executed by a processor, cause the processor to carry out the method according to any of claims 1-6.

**Patentansprüche**

1. Computerimplementiertes Verfahren zur Überwachung einer Konzentration eines Reagens, umfassend:

Erfassen einer ersten Konzentration eines gegenwärtigen Reagens, die während des Einfüllens des gegenwärtigen Reagens mit einer voreingestellten Konzentration aus einer Reagensflasche in ein Gefäß über einen Flüssigkeitsweg gemessen wird;
Erfassen eines gegenwärtigen Verschleppungsvolumens, das im Gefäß und dem Flüssigkeitsweg verblieben ist, das in einem Prozess des Einfüllens eines vorherigen Reagens in das Gefäß und des Ablassens des vorherigen Reagens aus dem Gefäß bestimmt wird;
Erfassen einer zweiten Konzentration des gegenwärtigen Reagens, die während des Ablassens des gegenwärtigen Reagens aus dem Gefäß in die Reagensflasche über den Flüssigkeitsweg gemessen wird, und Bestimmen einer dritten Konzentration des gegenwärtigen Reagens, nachdem das gegenwärtige Reagens aus dem Gefäß in die Reagensflasche abgelassen wurde, basierend auf der voreingestellten Konzentration, einem Volumen der Reagensflasche und dem gegenwärtigen Verschleppungsvolumen;
Aktualisieren des gegenwärtigen Verschleppungsvolumens, das im Gefäß und dem Flüssigkeitsweg verblieben ist, basierend auf der ersten Konzentration, der zweiten Konzentration und dem Volumen der Reagensflasche; und
wenn die dritte Konzentration kleiner als eine voreingestellte Konzentrationsgrenze ist, Erinnern eines Benutzers daran, das gegenwärtige Reagens zu ersetzen und/oder das gegenwärtige Reagens durch ein höher konzentriertes Reagens aufzufrischen.

2. Verfahren nach Anspruch 1, wobei das Bestimmen der dritten Konzentration des gegenwärtigen Reagens basierend auf der voreingestellten Konzentration, dem Volumen der Reagensflasche und dem gegenwärtigen Verschleppungsvolumen, nachdem das gegenwärtige Reagens aus dem Gefäß in die Reagensflasche abgelassen wurde, umfasst:

nach dem Einfüllen des gegenwärtigen Reagens in das Gefäß, Bestimmen einer Konzentration des gegenwärtigen Reagens im Gefäß basierend auf der voreingestellten Konzentration, dem Volumen der Reagensflasche und dem gegenwärtigen Verschleppungsvolumen;

nachdem das gegenwärtige Reagens aus dem Gefäß in die Reagensflasche abgelassen wurde, Steuern, dass die Reagensflasche mit dem gegenwärtigen Reagens aufgefüllt wird, das die voreingestellte Konzentration aufweist; und

Bestimmen der dritten Konzentration des gegenwärtigen Reagens in der Reagensflasche basierend auf der Konzentration des gegenwärtigen Reagens im Gefäß, dem Volumen der Reagensflasche, der voreingestellten Konzentration und dem gegenwärtigen Verschleppungsvolumen.

3. Verfahren nach Anspruch 2, wobei das Bestimmen der Konzentration des gegenwärtigen Reagens im Gefäß basierend auf der voreingestellten Konzentration, dem Volumen der Reagensflasche und dem gegenwärtigen Verschleppungsvolumen umfasst:

Berechnen des Volumens der Hauptkomponente des gegenwärtigen Reagens im Gefäß unter Verwendung einer Formel von $Vaf = (Vb - Vco) \times Cbf$; und

Berechnen der Konzentration des gegenwärtigen Reagens im Gefäß unter Verwendung einer Formel von $Caf = Vaf \div Vb$;

wobei Vaf das Volumen der Hauptkomponente des gegenwärtigen Reagens im Gefäß repräsentiert, Vco das gegenwärtige Verschleppungsvolumen repräsentiert, Vb das Volumen der Reagensflasche repräsentiert und Cbf die voreingestellte Konzentration repräsentiert, Caf die Konzentration des gegenwärtigen Reagens im Gefäß repräsentiert.

4. Verfahren nach Anspruch 3, wobei das Bestimmen der dritten Konzentration des gegenwärtigen Reagens in der Reagensflasche basierend auf der Konzentration des gegenwärtigen Reagens im Gefäß, dem Volumen der Reagensflasche, der voreingestellten Konzentration und dem gegenwärtigen Verschleppungsvolumen umfasst:

Berechnen eines Volumens der Hauptkomponente des gegenwärtigen Reagens in der Reagensflasche unter Verwendung einer Formel von $Vad = (Vb - Vco) \times Vcaf + Vco \times Cbf$; und

Berechnen der dritten Konzentration des gegenwärtigen Reagens in der Reagensflasche unter Verwendung einer Formel von $Cad = Vad \div Vb$;

wobei Vad das Volumen der Hauptkomponente des gegenwärtigen Reagens in der Reagensflasche repräsentiert, Vco das gegenwärtige Verschleppungsvolumen repräsentiert, Vb das Volumen der Reagensflasche repräsentiert und Cbf die voreingestellte Konzentration repräsentiert, Caf die Konzentration des gegenwärtigen Reagens im Gefäß repräsentiert und Cad die dritte Konzentration repräsentiert.

5. Verfahren nach einem der Ansprüche 1-4, wobei das Aktualisieren des gegenwärtigen Verschleppungsvolumens, das im Gefäß und dem Flüssigkeitsweg verblieben ist, basierend auf der ersten Konzentration, der zweiten Konzentration und dem Volumen der Reagensflasche umfasst:

Berechnung eines aktualisierten Verschleppungsvolumens unter Verwendung einer Formel von:

$$Vco' = (CDF - CDD)/CDF \times Vb$$

Ersetzen des gegenwärtigen Verschleppungsvolumens durch das aktualisierte Verschleppungsvolumen;

wobei Vco' das aktualisierte Verschleppungsvolumen repräsentiert, CDD die zweite Konzentration des gegenwärtigen Reagens repräsentiert, CDF die erste Konzentration des gegenwärtigen Reagens repräsentiert und Vb das Volumen der Reagensflasche repräsentiert.

6. Verfahren nach einem der Ansprüche 1-5, wobei das gegenwärtige Reagens aus einer Gruppe bestehend aus Ethanol und Xylol ausgewählt ist.

7. Vorrichtung zur Überwachung einer Konzentration eines Reagens, umfassend:

ein erstes Erfassungsmodul (301), das dazu konfiguriert ist, eine erste Konzentration eines gegenwärtigen Reagens zu erfassen, die während eines Einfüllens des gegenwärtigen Reagens mit einer voreingestellten Konzentration aus einer Reagensflasche in ein Gefäß über einen Flüssigkeitsweg gemessen wird;

ein zweites Erfassungsmodul, das dazu konfiguriert ist, ein gegenwärtiges Verschleppungsvolumen, das im Gefäß und dem Flüssigkeitsweg verblieben ist, zu erfassen, das in einem Prozess eines Einfüllens eines vorherigen Reagens in das Gefäß und eines Ablassens des vorherigen Reagens aus dem Gefäß bestimmt wird;

ein Bestimmungsmodul (303), das dazu konfiguriert ist, eine zweite Konzentration des gegenwärtigen Reagens zu erfassen, die während eines Ablassens des gegenwärtigen Reagens aus dem Gefäß in die Reagensflasche über den Flüssigkeitsweg gemessen wird, und basierend auf der voreingestellten Konzentration, eines Volumens der Reagensflasche und des gegenwärtigen Verschleppungsvolumens eine dritte Konzentration des gegenwärtigen Reagens zu bestimmen, nachdem das gegenwärtige Reagens aus dem Gefäß in die Reagensflasche abgelassen wurde;

ein Aktualisierungsmodul (304), das dazu konfiguriert ist, das gegenwärtige Verschleppungsvolumen, das im Gefäß und dem Flüssigkeitsweg verblieben ist, basierend auf der ersten Konzentration, der zweiten Konzentration und dem Volumen der Reagensflasche zu aktualisieren; und

ein Erinnerungsmodul (305), das dazu konfiguriert ist, einen Benutzer daran zu erinnern, das gegenwärtige Reagens zu ersetzen, wenn die dritte Konzentration kleiner als eine voreingestellte Konzentrationsgrenze ist, und/oder ein Auffrischungsmodul (306), das dazu konfiguriert ist, das gegenwärtige Reagens durch ein höher konzentriertes Reagens aufzufrischen.

8. Vorrichtung nach Anspruch 7, wobei das Bestimmungsmodul umfasst:

eine erste Bestimmungseinheit, die dazu konfiguriert ist, nachdem das gegenwärtige Reagens in das Gefäß eingefüllt wurde, eine Konzentration des gegenwärtigen Reagens im Gefäß basierend auf der voreingestellten Konzentration, dem Volumen der Reagensflasche und dem gegenwärtigen Verschleppungsvolumen zu bestimmen;

eine Steuereinheit, die dazu konfiguriert ist, nachdem das gegenwärtige Reagens aus dem Gefäß in die Reagensflasche abgelassen wurde, zu steuern, dass die Reagensflasche mit dem gegenwärtigen Reagens aufgefüllt wird, das eine voreingestellte Konzentration aufweist; und

eine zweite Bestimmungseinheit, die dazu konfiguriert ist, die dritte Konzentration des gegenwärtigen Reagens in der Reagensflasche basierend auf der Konzentration des gegenwärtigen Reagens im Gefäß, dem Volumen der Reagensflasche, der voreingestellten Konzentration und dem gegenwärtigen Verschleppungsvolumen zu bestimmen.

9. Vorrichtung nach Anspruch 8, wobei die erste Bestimmungseinheit umfasst:

ein erstes Berechnungsuntermodul, das dazu konfiguriert ist, ein Volumen der Hauptkomponente des gegenwärtigen Reagens im Gefäß unter Verwendung einer Formel von $Vaf = (Vb - Vco) \times Cbf$ zu berechnen; und

ein zweites Berechnungsuntermodul, das dazu konfiguriert ist, die Konzentration des gegenwärtigen Reagens im Gefäß unter Verwendung einer Formel von $Caf = Vaf \div Vb$ zu berechnen;

wobei Vaf das Volumen der Hauptkomponente des gegenwärtigen Reagens im Gefäß repräsentiert, Vco das gegenwärtige Verschleppungsvolumen repräsentiert, Vb das Volumen der Reagensflasche repräsentiert und Cbf die voreingestellte Konzentration repräsentiert, Caf die Konzentration des gegenwärtigen Reagens im Gefäß repräsentiert.

10. Vorrichtung nach Anspruch 9, wobei die zweite Bestimmungseinheit umfasst:

ein drittes Berechnungsuntermodul, das dazu konfiguriert ist, ein Volumen der Hauptkomponente des gegenwärtigen Reagens in der Reagensflasche unter Verwendung einer Formel von $Vad = (Vb - Vco) \times Caf + Vco \times Cbf$ zu berechnen; und

ein viertes Berechnungsuntermodul, das dazu konfiguriert ist, die dritte Konzentration des gegenwärtigen Reagens in der Reagensflasche unter Verwendung einer Formel von $Cad = Vad \div Vb$ zu berechnen;

wobei Vad das Volumen der Hauptkomponente des gegenwärtigen Reagens in der Reagensflasche repräsentiert, Vco das gegenwärtige Verschleppungsvolumen repräsentiert, Vb das Volumen der Reagensflasche repräsentiert und Cbf die voreingestellte Konzentration repräsentiert, Caf die Konzentration des gegenwärtigen Reagens im Gefäß repräsentiert und Cad die dritte Konzentration repräsentiert.

11. Vorrichtung nach einem der Ansprüche 7-10, wobei das Aktualisierungsmodul umfasst:

eine dritte Bestimmungseinheit, die dazu konfiguriert ist, ein aktualisiertes Verschleppungsvolumen unter Verwendung einer Formel zu bestimmen von:

$$Vco' = (CDF - CDD)/CDF×Vb$$

eine Ersetzungseinheit, die dazu konfiguriert ist, das gegenwärtige Verschleppungsvolumen durch das aktualisierte Verschleppungsvolumen zu ersetzen;

wobei Vco' das aktualisierte Verschleppungsvolumen repräsentiert, CDD die zweite Konzentration des gegenwärtigen Reagens repräsentiert, CDF die erste Konzentration des gegenwärtigen Reagens repräsentiert und Vb das Volumen der Reagensflasche repräsentiert.

12. Ausrüstung zur Überwachung einer Konzentration eines Reagens, umfassend: eine Dichtemessvorrichtung, einen Zwischenspeicher, eine Steuereinheit und einen Prozessor;

wobei die Steuereinheit dazu konfiguriert ist, zu steuern, dass ein gegenwärtiges Reagens mit einer voreingestellten Konzentration aus einer Reagensflasche über einen Flüssigkeitsweg in ein Gefäß eingefüllt wird, und zu steuern, dass das gegenwärtige Reagens über den Flüssigkeitsweg aus dem Gefäß in die Reagensflasche abgelassen wird;

die Dichtemessvorrichtung dazu konfiguriert ist, eine erste Konzentration des gegenwärtigen Reagens während des Einfüllens und eine zweite Konzentration des gegenwärtigen Reagens während des Ablassens zu messen;

der Zwischenspeicher dazu konfiguriert ist, Parameter zwischenzuspeichern, die die voreingestellte Konzentration, ein Volumen der Reagensflasche, ein gegenwärtiges Verschleppungsvolumen, das im Gefäß und dem Flüssigkeitsweg verblieben ist, und eine voreingestellte Konzentrationsgrenze einschließen;

wobei der Prozessor konfiguriert ist zum:

Erfassen der ersten Konzentration des gegenwärtigen Reagens, die während des Einfüllens gemessen wird;

Erfassen der voreingestellten Konzentration, einer Wasserkonzentration, des Volumens der Reagensflasche, der voreingestellte Konzentrationsgrenze und des gegenwärtigen Verschleppungsvolumens, das im Gefäß verblieben ist, aus dem Zwischenspeicher;

Erfassen der zweiten Konzentration des gegenwärtigen Reagens, die während des Ablassens gemessen wird;

Bestimmen einer dritten Konzentration des gegenwärtigen Reagens basierend auf der voreingestellten Konzentration, dem Volumen der Reagensflasche und dem gegenwärtigen Verschleppungsvolumen, nachdem das gegenwärtige Reagens aus dem Gefäß in die Reagensflasche abgelassen wurde;

Bestimmen eines aktualisierten gegenwärtigen Verschleppungsvolumens, das im Gefäß und dem Flüssigkeitsweg verblieben ist, basierend auf der ersten Konzentration, der zweiten Konzentration und dem Volumen der Reagensflasche und Ersetzen des im Zwischenspeicher gespeicherten gegenwärtigen Verschleppungsvolumens durch das aktualisierte gegenwärtige Verschleppungsvolumen; und

wenn die dritte Konzentration kleiner als die voreingestellte Konzentrationsgrenze ist, Erinnern eines Benutzers daran, das gegenwärtige Reagens zu ersetzen und/oder das gegenwärtige Reagens durch ein höher konzentriertes Reagens aufzufrischen.

13. Nichttransitorisches computerlesbares Medium, auf dem Anweisungen gespeichert sind, die bei Ausführung durch einen Prozessor den Prozessor dazu veranlassen, das Verfahren nach einem der Ansprüche 1-6 auszuführen.

**Revendications**

1. Procédé mis en œuvre par ordinateur de surveillance d'une concentration d'un réactif, comprenant :

l'acquisition d'une première concentration d'un réactif en cours mesurée pendant le remplissage du réactif en cours avec une concentration prédéfinie à partir d'un flacon de réactif dans un récipient par l'intermédiaire d'un trajet de liquide ;

l'acquisition d'un volume de recirculation en cours laissé dans le récipient et le trajet de liquide déterminé dans un processus de remplissage d'un réactif précédent dans le récipient et de vidage du réactif précédent du récipient ;

l'acquisition d'une deuxième concentration du réactif en cours mesurée pendant le vidage du réactif en cours à partir du récipient vers le flacon de réactif par l'intermédiaire du trajet de liquide, et la détermination, sur la base de la concentration prédéfinie, d'un volume du flacon de réactif et du volume de recirculation en cours, d'une troisième concentration du réactif en cours après que le réactif en cours est vidé du récipient vers le flacon de réactif ;

l'actualisation du volume de recirculation en cours laissé dans le récipient et le trajet de liquide sur la base de la première concentration, de la deuxième concentration et du volume du flacon de réactif ; et

lorsque la troisième concentration est inférieure à une limite de concentration prédéfinie, le rappel à un utilisateur de remplacer le réactif en cours et/ou le rafraîchissement du réactif en cours avec un réactif de concentration supérieure.

2. Procédé selon la revendication 1, dans lequel la détermination, sur la base de la concentration prédéfinie, du volume du flacon de réactif et du volume de recirculation en cours, de la troisième concentration du réactif en cours après que le réactif en cours est vidé du récipient vers le flacon de réactif comprend :

après que le réactif en cours est rempli dans le récipient, la détermination d'une concentration du réactif en cours dans le récipient sur la base de la concentration prédéfinie, du volume du flacon de réactif et du volume de recirculation en cours ;

après que le réactif en cours est vidé du récipient vers le flacon de réactif, la commande du flacon de réactif pour qu'il soit complété avec le réactif en cours présentant la concentration prédéfinie ; et

la détermination de la troisième concentration du réactif en cours dans le flacon de réactif sur la base de la concentration du réactif en cours dans le récipient, du volume du flacon de réactif, de la concentration prédéfinie et du volume de recirculation en cours.

3. Procédé selon la revendication 2, dans lequel la détermination de la concentration du réactif en cours dans le récipient sur la base de la concentration prédéfinie, du volume du flacon de réactif et du volume de recirculation en cours comprend :

le calcul d'un volume d'un composant majeur du réactif en cours dans le récipient en utilisant une formule de $Vaf = (Vb - Vco) \, XCbf$, et

le calcul de la concentration du réactif en cours dans le récipient en utilisant une formule de $Caf = Vaf \div Vb$ ;

où Vaf représente le volume d'un composant majeur du réactif en cours dans le récipient, Vco représente le volume de recirculation en cours, Vb représente le volume du flacon de réactif, et Cbf représente la concentration prédéfinie, Caf représente la concentration du réactif en cours dans le récipient.

4. Procédé selon la revendication 3, dans lequel la détermination de la troisième concentration du réactif en cours dans le flacon de réactif sur la base de la concentration du réactif en cours dans le récipient, du volume du flacon de réactif, de la concentration prédéfinie et du volume de recirculation en cours comprend :

le calcul d'un volume d'un composant majeur du réactif en cours dans le flacon de réactif en utilisant une formule de $Vad = (Vb - Vco) \, XCaf + Vco \, XCbf$, et

le calcul de la troisième concentration du réactif en cours dans le flacon de réactif en utilisant une formule de $Cad = Vad \div Vb$ :

où Vad représente le volume d'un composant majeur du réactif en cours dans le flacon de réactif, Vco représente le volume de recirculation en cours, Vb représente le volume du flacon de réactif, et Cbf représente la concentration prédéfinie, Caf représente la concentration du réactif en cours dans le récipient, et Cad représente la troisième concentration.

5. Procédé selon l'une quelconque des revendications 1 à 4, dans lequel l'actualisation du volume de recirculation en cours laissé dans le récipient et le trajet de liquide sur la base de la première concentration, de la deuxième concentration et du volume du flacon de réactif comprend :

le calcul d'un volume de recirculation actualisé en utilisant une formule de :

$$Vco' = (CDF - CDD)/CDF \, XVb$$

le remplacement du volume de recirculation en cours par le volume de recirculation actualisé ;

où Vco' représente le volume de recirculation actualisé, CDD représente la deuxième concentration du réactif en cours, CDF représente la première concentration du réactif en cours, et Vb représente le volume du flacon de réactif.

6. Procédé selon l'une quelconque des revendications 1 à 5, dans lequel le réactif en cours est sélectionné dans un groupe consistant en éthanol et xylène.

7. Appareil de surveillance d'une concentration d'un réactif, comprenant :

un premier module d'acquisition (301), configuré pour acquérir une première concentration d'un réactif en cours mesurée pendant le remplissage du réactif en cours avec une concentration prédéfinie à partir d'un flacon de réactif dans un récipient par l'intermédiaire d'un trajet de liquide ;

un second module d'acquisition, configuré pour acquérir un volume de recirculation en cours laissé dans le récipient et le trajet de liquide déterminé dans un processus de remplissage d'un réactif précédent dans le récipient et de vidage du réactif précédent du récipient ;

un module de détermination (303), configuré pour acquérir une deuxième concentration du réactif en cours mesurée pendant le vidage du réactif en cours du récipient vers le flacon de réactif par l'intermédiaire du trajet de liquide, et déterminer, sur la base de la concentration prédéfinie, d'un volume du flacon de réactif et du volume de recirculation en cours, d'une troisième concentration du réactif en cours après que le réactif en cours est vidé du récipient vers le flacon de réactif ;

un module d'actualisation (304), configuré pour actualiser le volume de recirculation en cours laissé dans le récipient et le trajet de liquide sur la base de la première concentration, de la deuxième concentration et du volume du flacon de réactif ; et

un module de rappel (305), configuré pour rappeler à un utilisateur de remplacer le réactif en cours lorsque la troisième concentration est inférieure à une limite de concentration prédéfinie et/ou un module de rafraîchissement (306), configuré pour rafraîchir le réactif en cours avec un réactif de concentration supérieure.

8. Appareil selon la revendication 7, dans lequel le module de détermination comprend :

une première unité de détermination, configurée pour, après que le réactif en cours est rempli dans le récipient, déterminer une concentration du réactif en cours dans le récipient sur la base de la concentration prédéfinie, du volume du flacon de réactif et du volume de recirculation en cours ;

une unité de commande, configurée pour, après que le réactif en cours est vidé du récipient vers le flacon de réactif, commander le flacon de réactif pour qu'il soit complété avec le réactif en cours présentant une concentration prédéfinie ; et

une deuxième unité de détermination, configurée pour déterminer la troisième concentration du réactif en cours dans le flacon de réactif sur la base de la concentration du réactif en cours dans le récipient, du volume du flacon de réactif, de la concentration prédéfinie et du volume de recirculation en cours.

9. Appareil selon la revendication 8, dans lequel la première unité de détermination comprend :

un premier sous-module de calcul, configuré pour calculer un volume d'un composant majeur du réactif en cours dans le récipient en utilisant une formule de $Vaf = (Vb - Vco) XCbf,$ et

un deuxième sous-module de calcul, configuré pour calculer la concentration du réactif en cours dans le récipient en utilisant une formule de $Caf = Vaf \div Vb$

où Vaf représente le volume d'un composant majeur du réactif en cours dans le récipient, Vco représente le volume de recirculation en cours, Vb représente le volume du flacon de réactif, et Cbf représente la concentration prédéfinie, Caf représente la concentration du réactif en cours dans le récipient.

10. Appareil selon la revendication 9, dans lequel la deuxième unité de détermination comprend :

un troisième sous-module de calcul, configuré pour calculer un volume d'un composant majeur du réactif en cours dans le flacon de réactif en utilisant une formule de $Vad = (Vb - Vco) XCaf + VcoXCbf$ et

un quatrième sous-module de calcul, configuré pour calculer la troisième concentration du réactif en cours dans le flacon de réactif en utilisant une formule de $Cad = Vad \div Vb'$,

où Vad représente le volume d'un composant majeur du réactif en cours dans le flacon de réactif, Vco représente le volume de recirculation en cours, Vb représente le volume du flacon de réactif, et Cbf représente la concentration prédéfinie, Caf représente la concentration du réactif en cours dans le récipient, et Cad représente la troisième concentration.

11. Appareil selon l'une quelconque des revendications 7 à 10, dans lequel le module d'actualisation comprend :

une troisième unité de détermination, configurée pour déterminer un volume de recirculation actualisé en utilisant une formule de :

$$Vco' = (CDF - CDD)/CDF \, XVb$$

une unité de remplacement, configurée pour remplacer le volume de recirculation en cours par le volume de recirculation actualisé ;

où Vco' représente le volume de recirculation actualisé, CDD représente la deuxième concentration du réactif en cours, CDF représente la première concentration du réactif en cours, et Vb représente le volume du flacon de réactif.

12. Équipement de surveillance d'une concentration d'un réactif, comprenant : un densimètre, une mémoire cache, un dispositif de commande et un processeur ;

dans lequel le dispositif de commande est configuré pour commander un réactif en cours avec une concentration prédéfinie pour qu'il soit rempli dans un récipient à partir d'un flacon de réactif par l'intermédiaire d'un trajet de liquide, et pour commander le réactif en cours pour qu'il soit vidé du récipient vers le flacon de réactif par l'intermédiaire du trajet de liquide ;

le densimètre est configuré pour mesurer une première concentration du réactif en cours pendant le remplissage et une deuxième concentration du réactif en cours pendant le vidage ; la mémoire cache est configurée pour mettre en cache des paramètres incluant la concentration prédéfinie, un volume du flacon de réactif, un volume de recirculation en cours laissé dans le récipient et le trajet de liquide, et une limite de concentration prédéfinie ;

le processeur est configuré pour :

acquérir la première concentration du réactif en cours mesurée pendant le remplissage ;

acquérir la concentration prédéfinie, une concentration d'eau, le volume du flacon de réactif, la limite de concentration prédéfinie, et le volume de recirculation en cours laissé dans le récipient à partir de la mémoire cache ;

acquérir la deuxième concentration du réactif en cours mesurée pendant le vidage ;

déterminer une troisième concentration du réactif en cours après que le réactif en cours est vidé du récipient vers le flacon de réactif sur la base de la concentration prédéfinie, du volume du flacon de réactif et du volume de recirculation en cours ;

déterminer un volume de recirculation en cours actualisé laissé dans le récipient et le trajet de liquide sur la base de la première concentration, de la deuxième concentration et du volume du flacon de réactif, et remplacer le volume de recirculation en cours enregistré dans la mémoire cache par le volume de recirculation en cours actualisé ; et

lorsque la troisième concentration est inférieure à la limite de concentration prédéfinie, rappeler à un utilisateur de remplacer le réactif en cours et/ou rafraîchir le réactif en cours avec un réactif de concentration supérieure.

13. Support non transitoire lisible par ordinateur sur lequel sont stockées des instructions qui, lorsqu'exécutées par un processeur, amènent le processeur à réaliser le procédé selon l'une quelconque des revendications 1 à 6.

S101

acquiring a first concentration of a current reagent measured during filling of the current reagent with a preset concentration from a reagent bottle into a vessel

S102

acquiring a current volume of carryover left in the vessel and the liquid path determined in a process of filling a previous reagent into the vessel and draining the previous reagent out from the vessel

S103

acquiring a second concentration of the current reagent measured during draining of the current reagent from the vessel to the reagent bottle via the liquid path determining, based on the preset concentration, a volume of the reagent bottle and the current volume of carryover, a third concentration of the current reagent after the current reagent is drained out from the vessel to the reagent bottle

S104

updating the current volume of carryover left in the vessel based on the first concentration, the second concentration and the volume of the reagent bottle

S105

when the third concentration is less than a preset concentration limit, reminding a user to replace the current reagent and/or refreshing the current reagent with a higher concentrated reagent

FIG. 1

Start

S201, Prepare all required reagent
with respective predetermined
concentrations

S202, Run protocol

S203, Init algorithm parameters

S204, Filling

S205, Density meter measures
concentration of reagent

S206, Fill finished? — N

Y

S207, Calculate concentration of
reagent in vessel

S208, Tissue processing

S209, Draining

S210, Density meter measures
concentration of reagent

S211, Drain finished? — N

Y

S212, Calculate concentration of
reagent in regent bottle

S213, Update volume of carryover

S214, Protocol finished? — Y — End

N

S215, Move to next reagent

FIG. 2

20

first acquiring module 301

second acquiring module 302

determining module 303

updating module 304

reminding module 305 and/or refreshing module 306

FIG. 3

Processor

System Bus

Operation system

Computer program

non-volatile storage medium

Internal memory

Memory

electronic device

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020174029 A1

- US 2007243626 A1